Europäisches Patentamt

European Patent Office

Office européen des brevets

(19)

(11) Veröffentlichungsnummer: **0 106 318**
**B1**

(12) **EUROPÄISCHE PATENTSCHRIFT**

(45) Veröffentlichungstag der Patentschrift: **28.09.88**

(51) Int. Cl.⁴: **H 04 M 1/56**, H 04 M 1/57

(21) Anmeldenummer: **83110212.4**

(22) Anmeldetag: **13.10.83**

(54) Fernsprechapparat mit optischen Anzeigeeinrichtungen.

(30) Priorität: **20.10.82 DE 3238770**

(43) Veröffentlichungstag der Anmeldung:
**25.04.84 Patentblatt 84/17**

(45) Bekanntmachung des Hinweises auf die
Patenterteilung:
**28.09.88 Patentblatt 88/39**

(84) Benannte Vertragsstaaten:
**AT BE GB IT**

(56) Entgegenhaltungen:
EP-A-0 082 512
DE-A-2 720 435
DE-A-3 029 661
DE-A-3 139 508
DE-C-1 256 717
FR-A-2 183 442

ntz Band 33 (1980) Heft 12, Seiten 802 bis 806

(73) Patentinhaber: TELENORMA Telefonbau und
Normalzeit GmbH
Mainzer Landstrasse 128-146
D-6000 Frankfurt am Main (DE)

(72) Erfinder: Scherer, Ulrich, Dipl.-Ing.
Am Forst 47
D-6110 Dieburg (DE)
Erfinder: Cezanne, Lothar
Bahnstrasse 2a
D-6082 Mörfelden-Walldorf (DE)
Erfinder: Rüdiger, Thomas, Ing.-grad.
Leipziger Strasse 79
D-6000 Frankfurt/Main (DE)
Erfinder: Burkart, Peter
Otto-Han-Strasse 7
D-6082 Mörfelden-Walldorf (DE)

### Beschreibung

Die Erfindung betrifft einen Fernspechapparat mit optischen Anzeigeeinrichtungen, die mehrstellige alphanumerische Informationen wiedergeben können, womit die Rufnummer des jeweiligen Gesprächspartners angezeigt wird.

Fernsprechapparate mit Einrichtungen zur Anzeige der Rufnummern von anrufenden bzw. angerufenen Fernsprechteilnehmern sind bekannt. So ist beispielsweise in der DE—AS—12 56 717 eine Schaltungsanordnung für Hotel- oder Krakenhausbetriebe angegeben, bei der mit Hilfe einer in der Vermittlungsanlage vorhandenen Identifizierungseinrichtung die Rufnummer eines anrufenden Teilnehmers ermittelt und zu einer angerufenen Servicestelle hin übertragen wird. Die Steuerung der Anzeige erfolgt über ein separates, von der Fernsprechverbindung unabhängiges Leitunganetz. Außer der Rufnummer des aurufenden Teilnahmers können keine weitere Informationen durchgegeben werden. Somit ist keine über den Herkunftsort des Anrufes hinausgehende Information an der angerufenen Stelle möglich.

Auch das Übertragen einer den angerufenen Teilnehmer kennzeichnenden Information in Ruckwärtsrichtung zum anrufenden Teilnehmer ist bekannt aus der DE—PS—9 20 373. Hier werden die vom anrufenden Teilnehmer ausgesendeten Wählsignale benutzt, indem diese in der Vermittlungsanlage aufgenommen und über die Sprechadern zurück zum rufenden Teilnehmer übertragen werden. Die damit gesteuerten Anzeigemittel ermöglichen dem enrufenden Teilnehmer eine Kontrolle darüber, ob er die Verbindung zur richtigen Stelle aufgebaut hat. Dabei handelt es sich auch lediglich um die Anzeige der Rufnummer des angerufenen Teilnehmers, und es ist nicht möglich, daß darüber hinausgehende Informationen zum anrufenden Teilnehmer gelangen.

In der "ntz" Band 33 (1980) Heft 12 ist auf den Seiten 802 bis 806 ein Aufsatz mit dem Titel "Fernsprechendgeräte in digitaler Technik" abgedruckt. Hier wird beschrieben, daß in den Progammtasten Leuchdioden eingebaut sind, um den Benutzer mit optischen Signalen jederzeit auf den aktuellen Bedienzustand hinzuweisen. Außerdem ist ein sechzehnstelliges alpha-numerisches Display vorgesehen, wo Rufnummern bzw. Namen der rufenden Teilnehmer. Gebühren, Termine und Nachrichten angezeigt werden können. Es ist nicht im einzelnen beschrieben, auf welche Weise die Übertragung der Information für die Displayanzeige erfolgt, sondern lediglich erwähnt, daß das Aktivieren von Displayanzeigen von der Vermittlung aus geschieht. Da es sich um ein digitales Fernsprechendgerät handelt, ist zu vermuten, daß die übertragung der zur Anzeige bestimmten Information im sogenannten Signalisierungskanal erfolgt. In diesem Aufsatz ist auch nichts darüber ausgesagt, daß angezeigt wird, welche Berechtigungsklassen und Zusatzmerkmale dem eigenen Teilnehmeranschluß oder auch dem Gesprächspartner zugeordnet sind.

Schließlich ist es auch bekannt, daß beim Zustandekommen einer Fernsprechverbindung die beiden miteinander verbundenen Anschlüsse sich gegenseitig Kennungszeichen austacuschen. Ein Verfahren zur Übertragung einer bei einem Fernsprechteilnehmer sichtbar zu machenden Information über den anderen an der betreffenden Verbindung beteiligten Fernsprechteilnehmer ist beschrieben in der DE—OS—30 29 661. Die Aufgabe dieses Verfahrens besteht darin, ein selbsttätiges gegenseitiges "Sich-vorstellen" der beiden miteinander verbundenen Anschlüsse zu bewirken, ohne daß dabei die Mitwirkung der Vermittlungsanlage erforderlich ist. Es handelt sich demgemäß nur um solche Kennungszeichen, die den betreffenden anrufenden bzw. angerufenen Teilnehmer eineutig identifizieren, also nur um dessen Rufnummer oder in komfortabler Ausführung auch dessen Name, einschließlich Ortsnetz und ggf. Landeskennzahl, bzw. um die Angabe der Orts- und/oder Landesbezeichung. Die Übertragung weiterer Informationen, die Aufkunft geben über dem Teilnehmer zugeordnete Merkmale oder über gerade herrschende Verbindungszustände läßt sich mit diesem Verfahren nicht durchführen, weil dazu die Mithilfe der Vermittlungsanlage erforderlich wäre.

Die vorgenannten Schriften beinhalten nur Verfahren oder Schaltungsanordnung zum Anzeigen einer Rufnummer als Identitätskennzeichen eines als Gesprächsparter in Frage kommenden Fernsprechteilnehmers bzw, zusätzlich über. Weitergehende den vorherrschenden Verbindungszustand und die Verbindungsart informationen, beispielsweise über die beim Gesprächsparter oder beim eigenen Anschluß wirksam geschalteten Merkmale und Berechtigungen werden bei diesen Anordnungen nicht übertragen und auch nicht angezeigt.

Besonders bei Fernsprechnebenstellenanlagen, wo eine große Veilfalt verschiedener Verbindungszustände, Verbindungsarten und Merkmalsvariationen vorhanden sein kann, ist es für einen Fernsprechnebenstellenteilnehmer vorteilhaft, wen er ein großes Meß an Information angeboten und angezeigt bekommt.

Die Aufgabe der vorliegenden Erfindung besteht darin, einen Fernsprechapparat mit optischen Anzeigeeinrichtungen vorzustellen, mit dem neben den eine Verbindung betreffenden Informationen, wie Rufnummern, Verbindungsart und Verbindung zusatzlich einem Teilnehmer auch angezeigt wird, welche Eigenschaften sein eigener Anschluß und/oder der seines Partners besitzt. Außerdem sollen die Anzeigeeinrichtungen des Fernsprechapparates über die Anschlußleitung mit Strom versorgt werden können, so daß keine zusätliche Stromversorgungseinrichtung erforderlich wird.

Die Lösung dieser Aufgabe geschieht durch eine Merkmalskombination, wie sie im Patentanspruch 1 angegeben ist. Weiterbildungen der Erfindung ergeben sich aus den Unteransprüchen. Eine Schaltungsanordnung zur Bereitstellung der Daten für die Ansteuerung von in Teilnehmerapparaten befindlichen Anzeigeelementen ist im Nebenanspruch 14 angegeben.

Ein Teilnehmer, der mit einem derartigen Fernsprechapparat ausgerüstet ist, hat damit erfindungsgemäß den Vorteil, daß er außer der Rufnummer seines Gesprächspartners auch erkennen kann, um welche Verbindungsart es sich handelt, in welchem Zustand die Verbindung ist und welche Merkmale und Bereichtigungen bei seinem Gesprächspartner aktiviert sind. Wie später noch erläutert wird, bedeutet dies für einen Fernsprechnebenstellenteilnehmer, daß er beim Aufbauen einer Rückfrageverbindung anhand der Berechtigung des anrufenden Teilnehmers erkennen kann, ob die wertende Amtsverbindung zu diesem Teilnehmer durchgeschaltet werden kann, wenn er zum Zecke einer Umlegung das Rückfragegespräch beendet. Für einen anrufenden Teilnehmer ist u.a. auch erkennbar, ob der angewählte Anschluß beispielsweise das Merkmal Anrufschutz aktiviert hat. Auch beim angerufenen Teilnehmer kann leicht erkannt werden, welche Berechtigungen und Merkmalskombinationen bei einem anrufenden Anschluß aktiviert sind, und ob dieser in der Lage ist, aufgrund seiner Berechtigung beim angerufenen Anschluß aktivierte Merkmale zu ändern oder zu löschen.

Weiterbildungen der Erfindung gehen aus den Unteransprüchen hervor, wo mehrere durch die zusätzliche Anordnung der Status-Anzeigen gegebene Möglichkeiten aufgezeigt sind. Je nach Art und Umfang der Vermittelungsanlage sind weitere Kombinationsmöglichkeiten denkbar. U.a. ist in den Unteransprüchen noch eine Schaltungsanordnung angegeben, womit in vorteilhafter Weise bei einem geringen Schaltungs- und Leitungsaufwand pro Teilnehmer die Übertragung der aus der zentralen Steuerung der Vermittlungsanlage stammenden Anzeigedaten zu den einzelnen mit den Anzeigeeinrichtungen versehenen Fernsprechapparaten durchgeführt wird.

Ein Ausführungsbeispiel der Erfindung wird nachfolgend anhand von Zeichnungen näher erläutert.

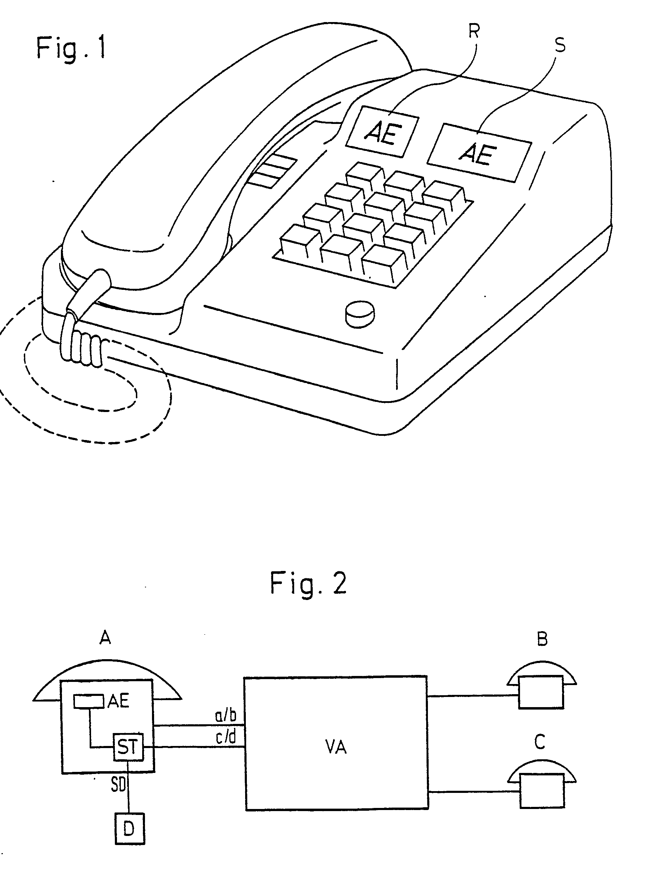

Es zeigt Fig. 1 einen Fernsprechapparat mit zusätzlichen Anzeigeeinheiten AE für die Status-Anzeige S neben der Rufnammernanzeige R.

Fig. 2 das Blockschaltbild einer Vermittlungsanlage VA mit daran angeschlossenen Teilnehmern A, B und C

Fig. 3 das Prinzip der Schaltungsanordnung für die Übertragung der Anzeigedaten zu den Fernsprechapparaten.

Die Fig. 1 zeigt einen Fernsprechapparat mit mehreren alphanumerischen Anzeigeelementen AE wobei eine geringere Anzahl von Anzeigeelementen AE für die Anzeige der Rufnummer R vorgesehen ist. Rechts daneben ist eine größere Anzahl von Anzeigeelementen AE angeordnet, auf denen Verbindungsarten. Verbindungszustände und Teilnehmermerkmale, zusammengefaßt als Status-Anzeige S bezeichnet, angezeigt werden. Da alle Anzeigeelemente AE alphanumerische Zeichen wiedergeben können, kann auch die eigentlich für Rufnummern vorgesehene Anzeige in Ausnahmefällen zur Anzeige eines Status benutzt werden, und umgekehrt ist es möglich, die Status-Anzeige zur Anzeige von Rufnummern zu benutzen, wenn eine Rufnummer angezeigt, werden soll, deren Stellenzahl die Kapazität der eigentlichen Rufnummernanzeige übersteigt. Wie später noch erläntert wird, können auch andere mit Ziffern zu bezeichnende Informationen, beispielsweise für die Gebührenerfassung, angeseigt werden.

Anhand der Fig. 2 werden nun einige von sehr vielen in einer Fernsprechnebenstellenanlage möglichen Betriebsarten mit zugehöriger Anzeige erläutert, wobei die durch die Anzeige sich ergebenden Vorteile besonders hervorgehoben werden.

Zunächst sie angenommen, daß der Teilnehmer A eine Internverbindung zum Teilnehmer B aufbaut. In der Rufnummernanzeige R des anrufenden Teilnehmers A erscheint dabei entsprechend der Wahlhandlung Ziffer für Ziffer des anzurufenden Teilnehmers E. Nach der Eingabe der letzten Wahlziffer erscheint in der Status-Anzeige S die Buchstabenfolge FREI, um dem Teilnehmer dan Freisein seines zukünftigen Gesprächspartner anzuzeigen. Falls der angerufene Teilnehmer B ·auch über eine derartige Anzeigeeinrichtung verfügt, erscheint bei ihm in der Rufnummeranzeige R die Rufnummer des anrufenden Teilnehmers A und in der Status-Anzeige S die Buchstabenfolge INT, womit der angerufene Teilnehmer darüber informiert wird, daß das ankommende Gespräch eine Internverbindung ist.

Zusätzlich zur Verbindungszustand- bzw. Verbindungsartanzeige können bei beiden Teilnehmern noch die Berechtigungen des jeweiligen Partners in Einzelbuchstaben angezeigt werden. Hierbei bedeutet beispielsweise:

N=nicht amtsberechtigt
V=Aufschalteverhinderung
RW=Rufweiterleitung nach Zeit
A=Anrufschutz
S=Sammelanschluß,

um nur einige zu nennen. Bei der Festlegung der Abkürzungen muß selbverständlich darauf geachtet werden, daß keine Doppeldeutigkeiten entstehen.

Die Bedeutung dieser Berechtigungen kommen hauptsächlich dann zum Tragen, wenn Besetztfälle vorliegen oder wenn aus anderen Gründen eine Verbindung nicht unmittelbar mit dem gewünschten Teilnehmer zustande kommt. Wenn ein anrufender Teilnehmer A den gewünschten Gesprächspartner B besetzt vorfindet, so wird dem anrufenden Teilnehmer A nicht nur der Besetztfall angezeigt, sondern auch über die Anzeige mitgeteilt, welche Art von Besetztzustand vorliegt. Die Anzeige für verschiedenartige Besetztfälle des gewünschten Teilnehmers B beim anrufenden Teilnehmer A könnte beispielsweise folgendermaßen aussehen:

INTB=TIn B führt ein Interngespräch

EXTB=TIn B führt ein Externgespräch

ANRB=TIn B ist von einem anderen Auruf besetzt.

Der anrufende Teilnehmer A ist aufgrund der Anzeige in der Lage zu beurteilen, ob eine evtl. Aufschlatung zum gewünschten Teilnehmer B sinnvoll ist. Unter der Voraussetzung, daß er zu dieser Aufschaltung bereichtigt ist, wird er sich wahrscheinlich bei einem Intern-Besetztfall zu einer Aufschaltung entschließen, bei einem Extern-Besetztfall möglicherweise die Aufschaltung unterlassen und bei einem Anruf-Besetztfall erkennen, daß eine Aufschaltung sinnlos ist.

Wenn der anzurufende Teilnehmer B das Merkmal "Anrufschutz" aktiviert hat, so wird er in bekannter Weise nicht angerufen, obwohl er frei ist. Dieser Zustand wird einem anrufenden Teilnehmer A in der folgenden Weise angezeigt:

2533 FREI A

Demit ist der anrufende Teilnehmer A darüber informiert, daß den gewünschte Partner nicht gestört werden möchte. Sollte der anrufende Teilnehmer A über ein Merkmal verfügen, das ihn zum Durchbrechen des Anrufschutzes berechtigt, so erscheint in unmittelbarer Nähe der Merkmalsanzeige A eine Ziffer, beispielsweise 4. Diese Ziffer kennzeichnet die zu betätigende Taste an der Wähltastatur oder zu wählende Ziffer mittels Nummernschalter, wenn der anrufende Teilnehmer A die Anrufschutzschaltung seines gewünschten Partners durchbrechen will.

Wenn der anrufende Teilnehmer A eine Verbindung zu einem anzurufenden Teilnehmer B aufbaut, bei dem eine Rufumweitungs- oder Rufweiterleitungsschaltung aktiviert ist, so erscheint zunächst in der Rufnummernanzeige R die gewählte Ziffernfolge also die Rufnummer den gewünschten Anschlusses. Parallel dazu erscheint in der Status-Anzeige S die Buchstabenkombination RU oder RW und rechts davon ebenfalls in der Status-Anzeige die Rufnummer des Anschluß, zu dem die Verbindung umgeleitet oder weitergeleitet wird. Bei sofortiger Rufumleitung bleibt diese Anzeige für einige Sekunden bestehen, so daß sie vom anrufenden Teilnehmer A mühelos abgelesen werden kann, so dann wechselt die Anzeige derart, daß in der Rufnummernanzeige R die neue Rufnummer erscheint, und in der Status-Anzeige S angezeigt wird, welcher Verbindungszustand beim nunmehr erreichten Anschluß vorherrscht. Bei eingeleitetem Merkmal Rufweiterleitung geschieht praktisch dasselbe mit dem einzigen Unterschied, daß der Anzeigenwechsel erst dann stattfindet, wenn die Rufweiterleitung durchgeführt wird. Bei einem Anzeigswechsel wird zusammen mit der Rufnummer des neu erreichten Anschlusses auch angezeigt, wie vorher beschrieben, welche Merkmale diesem Anschluß zugeordnet sind. In entsprechender Weise wird auch verfahren, wenn eine Rufnummer gewählt wird, die zu einem Sammelanschluß gehört. Das bei Fernsprechnebenstellenanlagen besonders wichtige Merkmal "Ruckfrage" wird ebenfalls, wie im folgenden beschrieben wird, bei der Status-Anzeige S berücksichtigt. Ein Rückfragegespräch kann bei modernen Nebenstellenanlagen nicht nur beim Bestehen eines Amtsgespräches sondern auch bei einer Internverbindung eingeleitet werden. Es sei angenommen, daß eine Internverbindung zwischen dem anrufenden Teilnehmer A und dem angerufenen Teilnehmer B besteht, wobei der anrufende Teilnehmer A eine Rückfrageverbindung zu einem rückgefragten Teilnehmer C aufbaut. Dabei gerät der bisherige Gesprächspartner, der Teilnehmer B in eine Wartestellung, und an seiner Status-Anzeige erscheint die Buchstabenkombination RFR. Der in Rückfrage angerufene Teilnehmer C erhält in seiner Status-Anzeige S die Bezeichnung RUECKFR eingeschrieben. Er erkennt daren, daß er in Rückfrage angerufen wurde und kann daraufhin damit rechnen, daß er nach Zustantekommen des Gespräches mit einem anderen Teilnehmer, dem vorherigen Gesprächspartner des Teilnehmers A, nämlich dem Teilnehmer B verbunden wird. Auch bei dem Teilnehmer A, der die Rückfragsverbindung eingeleitet hat, erscheint in dessen Statue-Azeige S die Verbindungsbezeichnung RUECKFR. Beim Zustandekommen der Rückfrageverbindung wird in dem Moment, wenn sich der in Rückfrage angerufene Teilnehmer C meldet, bei den miteinander verbundenen Teilnehmern A und C die Bezeichnung RUECKFR durch die Bezeichnung GESPR in deren Anzeigeeinrichtungen AE ersetzt. Die Bezeichnung GESPR erscheint auch bei allen übrigen Verbindungsarten immer dann, wenn sich ein angerufener Teilnehmer meldet.

Wenn bei einem Rückfragegespräch, der anrufende Teilnehmer über das Merkmal "Makeln" verfügt, und er die Verbindung wieder zu seinem ursprünglichen Gesprächspartner, dem Teilnehmer B zurückschaltet, so erscheint in der Anzeige des Teilnehmers C anstelle der Bezeichnung GESPR die Bezeichnung MAK. Beim ursprünglichen angerufenen Teilnehmer B wechselt die Anzeige von Buchstabenkombination RFR um in die Bezeichnung GESPR zum Zeichen dafür, daß nun das Gespräch fortgesetzt werden soll. Dieses sogenannte Makelverfahren kann beliebig oft wiederholt werden, wobei die Anzeigen bei den beiden Partnern des anfurenden Teilnehmers A jeweils wie beschrieben ihre Bezeichnungsart wechseln.

Wenn bei einer Rückfrage- oder Makelverbindung der garade in Wartestellung befindliche Teilnehmer sich durch Auflegen des Hörers von der Verbindung abschaltet, erscheint beim anrufenden Teilnehmer A in der Status-Anzeige S das Wort ENDE. Der Teilnehmer A erkennt daren, daß er in normaler Weise nur noch mit einem Teilnehmer verbunden ist.

Wie bereits beschrieben wurde, wird bei einen ankommenden Anruf neben der Rufnummer des anrufenden Teilnehmers auch die Verbindungsart angezeigt. Dabei kann auch die Rufnummernanzeige R dazu benutzt werden, die Anrufart zu kennzeichnen. Bei einem ankommenden Durchwahlanruf wird anstelle einer nur aus Ziffern bestehenden Teilnehmernummer dann beispielsweise die Anzeige AD 01 sichtbar. Diese Anzeige bedeutet, daß auf der Amtsleitung 01 ein Durchwahlanruf direkt zu dem betreffenden Teilnehmer gelangt ist. Ein kommender Amtsanruf, der bereits von der Vermittlung abgefragt wurde und dann zu dem betreffenden Teilnehmer weitervermittelt wurde, wird angezeigt mit der Buchstaben/Zahlenkombination AK 02. Für den Fall, daß eine abgehende Amtsverbindung dem Teilnehmer im Zuge einer von der Abfragestelle aus vorgenommenen Zuteilung oder durch Umlegung von einer anderen Teilnehmerstelle erreicht. Lautet die Anzeige beispielsweise AG 03. Der Teilnehmer erkennt daran, daß auf der dritten Amtsleitung eine gehende Verbindung für ihn besteht, wobei die anfallenden Gebühren seinem Anschluß zugerechnet werden.

Weitere Anrufarten lassen sich dadurch anzeigen, daß in der auch aus alphanummerischen Anzeigeeinheiten AE bestehenden Rufnummernanzeige R ausschließlich Buchstaben erscheinen. So bedeutet beispielsweise die Bezeichnung VERM, daß ein Anruf vom Vermittlungsplatz aus vorliegt.

Je nach den angerufenen Teilnehmer zugeordneten Merkmalen und Eigenschaften können besondere Anrufe speziell zur Anzeige gebracht werden. So bedeutet beispielsweise das Erscheinen der Rufnummer 110 in der Rufnummernanzeige R und dem Wort NOTANRUF, bei einem dafür vorgesehenen Apparat, das Eile bei der Beantwortung dieses Anrufes dringend geboten ist. Ebenso kann mit der Anzeige 2345 NOTKONF einer dafür vorgesehenen Teilnehmerstelle angezeigt werden, daß aus besonderem Anlaß eine Notkonferenz einberufen wurde. Auch hierbei wird der Teilnehmer durch die Anzeige aufgefordert, den Anruf schnellstens zu beantworten.

Wenn beim Aufbauen einer Fernverbindung oder zum Zwecke der Wahlwiederholung eine längere Rufnummer angezeigt werden soll, so können auch die Anzeigeelemente AE der Status-Anzeige S dafür mitbenutzt werden. Da es sich um eine Fernverbindung handelt, wobei auch andere Vermittelungsanlagen beteiligt sind, läßt sich der Status des angerufenen Teilnehmers ohnehin nicht ohne weiteres erfassen. Die Verbindungsart ist außerdem so eindeutig, daß sich eine spezielle Anzeige darüber erübrigt.

Die Anzeigeeinrichtung dient auch dazu, die beim eigenen Anschluß bestehenden Merkmale und Zustände anzuzeigen. Dies geschieht im Ruhezustand, also bei aufgelegtem Handapparat, indem beispielsweise folgende Anzeigen erscheinen:

RU=Rufumleitung eingeleitet
RR=Rückruf eingeleitet
AS=Anrufschutz besteht
DR=Direktrufanschluß

Wenn für eine größere Anzahl von gleichzeitig eingeleiteten Merkmalen die Status-Anzeige S nicht ausreicht, so kann auch die Rufnummernanzeige R dazu herangezogen werden. Außerdem ist es möglich, besondere Eigenschaften von Sprechstellen permanent anzuzeigen. So bedeutet beispielsweise:

N=Nachtstelle
S=Serviceapparat

Für diese Art von Anzeigen, die eine besondere Eigenschaft der Sprechstelle heraustellen sollen, können zusätzliche Anzeigeelemente AE vorgesehen werden.

Durch Betätigen von besonderen Tasten oder durch Wahl einer Kennziffer kann ein Teilnehmer veranlassen, daß ihm der akutelle Stand seines Gebührenzählers in die Anzeigeeinheit übertragen wird. Dabei kann die Gesamtsumme von Gebühreneinheiten oder Geldbeträgen genauso angezeigt werden, wie unmittelbar im Anschluß an ein geführtes Gespräch, die für dieses Gespräch angefallenen Gebühreneinheiten oder der Geldbetrag. Dabei erscheinen beispielsweise in der Anzeige für zwei verschiedene Gespräche bzw. für eine Gesamtsumme folgende Informationen:

D 30 DM 48 oder
P 72 GE

Dien bedeutet, das im ersten Fall für eine Gesamtsumme von 30, 48 DM Dienstgespräche geführt wurden. Im zweiten Fall handelt es sich um ein Privatgespräch (P) wofür 72 Gebühreneinheiten (GE) aufgelaufen sind.

Die hier beschriebenen Anzeigevariationen und—züglichkeiten stellen nur eine Auswahl der, die keinen Anspruch auf Vollständigkeit erhebt. Je nach den Eigenschaften und Möglichkeiten der Vermittlungsanlage, nämlich inwieweit diese für die Anzeige erforderlichen Informationen bereitstellen kann, lassen sich die Anzeigemöglichkeiten nahezu beliebig erweitern.

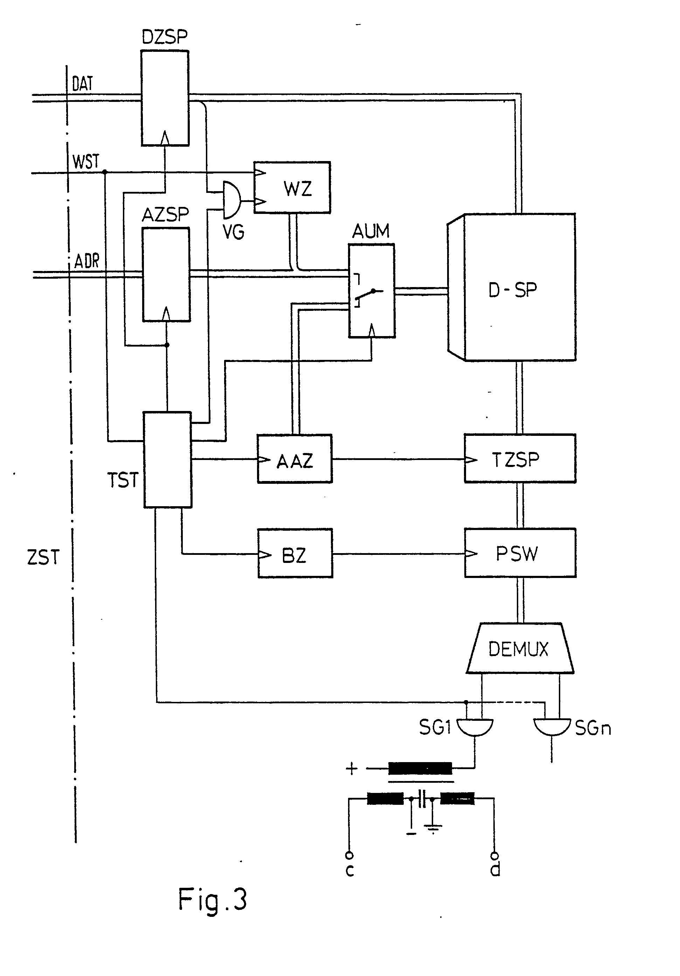

Im folgenden wird nun anhand der Fig. 3 eine Schaltungsanordnung beschrieben, womit die aus der Vermittlungsanlage VA kommenden Anzeigeinformationen über teilnehmerindividuelle Adern c/d zu den Anzeigeelementen AE der betreffenden Fernsprechapparate gelengen. Die von der zentralen Steuereinrichtung ZST wortweise pro Teil nehmer und Anzeigeeinheit AE angebotenen Anzeigedaten (DAT gelangen zunächst in einen Datenzwischenspeicher DZSP, der jeweils nur ein Datenwort aufnimmt. Für jeden Teilnehmerapparat ist vorgesehen, daß eine Anzahl von Datenworte übertragen wird, die gleich oder größer ist als die Anzahl der Anzeigeelemente AE. Wenn die für einen Teilnehmerapparat bestimmten Datenworte übertragen werden, wird auch dessen Adresse ADR in einen Adressenspeicher AZSP übernommen. Während einen Einspeichervorgangs ist ein Adressenumschalter AUM so eingestellt, daß die Teilnehmeradressen an die höherwertigen Adressiereingänge eines Datenspeichers D-SP gelangen. Damit wird der Bereich gekennzeichnet, der dem betreffenden Teilnehmer innerhalb des Datenspeichers D-SP zugeordnet ist. Bei jeder neuen Übergabe einen Wortes wird von einem Wortsteuertakt WST ein Wortzähler WZ um einen Schritt weitergezählt. Dessen Ausgänge sind über den Adressenumschalter AUM mit den niederwertigen Adressiereingängen des Datenspeichers D-SP verbunden. Auf diese Weise gelangt ein jedes Datenwort in die einer ganz bestimmten Anzeigeeinheit AE des betreffenden Teilnehmers zugeordnete Speicherzeile. Wenn bei der Einspeicherung von Anzeigedaten DAT nicht alle für einen Teilnehmer vorgesehenen Datenworte übertragen werden, so enthält das letzte Telegramm ein spezielles Bit, das einem Verknüpfungsgatter VG zugeführt wird. Daraufhin wird ein von einer Taktsteuerung TST bereitgestellter Zähltakt auf den Wortzähler WZ geschaltet, wodurch dieser in schneller Folge bis zum Ende des für den betreffenden Teilnehmer vorgesehenen Speicherbereichs gezählt wird. Es wird dadurch Zeit beim Einspeichern der Anzeigedaten DAT eingespart, wenn Informationslücken auftreten. Eine Einspeicherung von Anzeigedaten DAT wird immer dann für eine komplette Anzeigezeile eines Fernsprechapparates vorgenommen, wenn sich an der Anzeigeinformation etwas ändert.

Wenn keine Einspeicherung vorgenommen wird, dann sind die Adressiereingänge des Datenspeichers D-SP über den Adressenumschalter AUM mit den Ausgängen eines Auslese-Adressenzählers AAZ verbunden. Dieser Auslese-Adressenzähler AAZ stellt jeweils für mehrere Teilnehmer nacheinander die Adressen eines bestimmten Datenwortes ein. Daraufhin wird für mehrere Teilnehmer jeweils ein Wort nacheinander in verschiedene Teilnehmerzwischenspeicher TZSP übernommen. Diese Datenworte werden einzeln parallel seriell gewandelt in einem jeweils zugeordneten Parallel-Seriell-Wandler PSW der von einem Bitzähler BZ angesteuert wird. Die seriellen Wort-Telegramme gelangen über einen Demultiplexer DEMUX zu den einzelnen Teilnehmer zugeordneten Sendegattern SG1 bis SGn. Diese Sendegatter werden von einer in der Taktsteuerung TST erzeugten Taktfrequenz beaufschlagt und geben je nach der Beschaffenheit des seriell angebotenen Datenworts an ihrem Ausgang Sendesignale ab. Diese Sendesignale werden mit Hilfe eines Übertragers symmetrisch auf die zu den betreffenden Teilnehmer ührenden Speiseadern c/d eingespeizt. Über dieses Adernpaar verläuft auch die Stromversorgung für die Anzeigeelemente AE und deren Steuerung ST, wie dies in Fig. 2 angedeutet ist.

Die auf diese Weise seriell übertragenen einzelnen Datenworte haben ein solches Format, daß sie auch geeignet sind, für einen Drucker D der über eine Schnittstelle SD an einen Fernsprechapparat beispielsweise beim Teilnehmer A angeschlossen ist. Mit einem angeschalteten Drucker D lassen sich bei Bedarf angezeigte Informationen dauerhaft festhalten.

**Patentansprüche**

1. Fernsprechapparat mit optischen Anzeigeeinrichtungen, wobei mit mehrstelligen alpha-numerischen Anzeigeelementen die Rufnummer des Gesprächspartners und zusätzliche, die Verbindungsart und den Verbindungszustand Verbindung betreffende Informationen angezeigt werden, und wobei die anzuzeigende Information über die Anschlußleitung übertragen wird, dadurch gekennzeichnet daß eine Status-Anzeige (S) vorgesehen ist, die neben der Verbindungsart und dem Verbindungszustand auch permanent oder vorübergehend wirksam geschaltete Berechtigungsklassen und Zusatzmarkmale eines an der betreffenden Verbindung beteiligten Partners (A oder B) anzeigt, und daß im Rubezustand des Fernsprechapparates die dem eigenen Anschluß zugeordneten Merkmale in den Anzeigeelementen (AE) erscheinen.

2. Fernsprechapparat nach Anspruch 1, dadurch gekennzeichnet, daß besondere Eigenschaften z.B. Nachtstelle, Servicestelle, Hotelapparat, Konferenzstelle), die einem Anschluß vorübergehend oder dauernd zugeteilt sind, in separaten Anzeigeeinheiten (AE) angezeigt werden.

3. Fernsprechapparat nach Anspruch 1, dadurch gekennzeichnet, daß bei entsprechender Berechtigung eines anrufenden Teilnehmers (A) diesem angezeigt wird, mit welcher nachzuwählenden Ziffer oder zu betätigenden Taste ein bei einem angerufenen Teilnehmer (B) bestehenden Merkmal für diese eine Verbindung vorübergehend aufgehoben oder wirksam werden kann.

4. Fernsprechapparat nach Anspruch 1, dadurch gekennzeichnet, daß bei entsprechender Berechtigung eines Teilnehmers (A) durch Wahl einer Kennziffer oder Betätigung einer Sondertaste und nachfolgender Wahl einer Teilnehmernummer eine Anzeige des Status eines anderen Teilnehmers bewirkt werden kann, ohne daß eine Verbindung zu dem betreffenden Teilnehmer (B) aufgebaut wird, und daß daraufhin eine Änderung bestehender Merkmale bei diesem Teilnehmer, dessen Rufnummer außerdem angezeigt wird, durch Bedienungsprozeduren des ersten Teilnehmers (A) möglich ist.

5. Fernsprechapparat nach Anspruch 1, dadurch gekennzeichnet, daß bei entsprechender Berechtigung eines Teilnehmers (A) durch Wahl von Kennziffern oder Betätigung von Sondertasten eine Anzeige von Anlagedaten bewirkt werden kann und daß eine Änderung dieser Daten möglich ist, beispielsweise um Merkmale innerhalb der Vermittlungsanlage (VA) zu aktivieren oder zu sperren.

6. Fernsprechapparat nach Anspruch 1, dadurch gekennzeichnet, daß bei einem als Servicestelle besonders berechtigten Teilnehmeranschluß (B) zusätzlich angezeigt wird, wenn ein anrufender Teilnehmer (A) mit weiteren im Anschluß an den Verbindungsaufbau durchgegebenen Kennzeichen besondere Wünsche äußert.

7. Fernsprechapparat nach Anspruch 1, dadurch gekennzeichnet, daß bei einem als Konferenzstelle besonders berechtigten Teilnehmeranschluß (A) nach dem Betätigen einer Taste für das Einleiten einer Konferenzverbindung angezeigt wird, wieviel Teilnehmer an der Konferenzverbindudng beteiligt werden können und wieviel Teilnehmer tatsächlich daran beteiligt sind, und daß bei diesem Teilnehmerapparat (A) über die Anzeigeeinheiten (AE) Hinweise gegeben werden, welche Bedienungsprozeduren im einzelnen durchzuführen sind.

8. Fernsprechapparat nach Anspruch 1, dadurch gekennzeichnet, daß die Daten eines anrufenden Teilnehmers (A) beim gerufenen Teilsehmer (B) auch vor dem Zustandekommen einer Sprechverbindung angezeigt werden.

9. Fernsprechapparat nach Anspruch 1, dadurch gekennzeichnet, daß bei einer bestehenden Gesprächsverbindung bei einem der Teilnehmer (A oder B) angezeigt wird, wenn dieser von einem dritten Teilnehmer (C) verlangt wird.

10. Fernsprechapparat nach Anspruch 9, dadurch gekennzeichnet, daß die Anzeige bei einem im Gespräch befindlichen Teilnehmer (A oder B) nur dann erfolgt, wenn ein dritter anrufender Teilnehmer (C) eines der bekannten Merkmale "Anklopfen" oder "Aufschalten" wirksam werden läßt.

11. Fernsprechapparat nach Anspruch 1, dadurch gekennzeichnet, daß die Anzeige bei einem im Gespräch befindlichen Teilnehmer (A oder B) um zusätzliche Informationen erzeitert wird, wenn sein Gesprächspartner (B oder A) die Änderung eines Verbindungszustandes (beispielsweise Rückfrage) bewirkt und er dadurch in eine Wertestellung gerät.

12. Fernsprechapparat nach Anspruch 1, dadurch gekennzeichnet, daß die Anzeigeelemente (AE) auch zur Anzeige von Gebühreninformationen benutzt werden.

13. Fernsprechapparat nach Anspruch 1, dadurch gekennzeichnet, daß bei der Steuerung (S) für die Anzeigeelemente (AE) eine Schnittstelle (SD) für den Anschluß eines Druckers (D) vorgesehen ist, womit die angezeigte Information dauerhaft ausgedruckt werden kann.

14. Schaltungsanordnung zur Bereitstellung von Daten für die Ansteuerung von in Teilnehmerapparaten befindlichen Anzeigeelementen nach den Ansprüchen 1 bis 13, dadurch gekennzeichnet, daß auf der Anlagenseite für eine Gruppe von Teilnehmern ein gemeinsamer Datenspeicher (DSP) vorgesehen ist, der von der zentralen Steuerung (ZST) der Vermittlungsanlage (VA) pro Teilnehmer und pro Anzeigeeinheit (AE) wortweise angebotene Anzeigedaten (DAT) aufnimmt, daß dieser Datenspeicher (DSP) zyklisch ausgelesen wird, wobei anschließend jedes Datenwort pro Teilnehmer parallelseriell gewandelt und als Impulstelegramm über Anschlußadern (c/d) zum Teilnehmerapparat gesendet wird, und daß die Anzeigeelemente (AE) und deren apparateseitige Steuerung über diese Anschlußadern (c/d) mit Strom versorgt werden.

15. Schaltungsanordnung nach Anspruch 14, dadurch gekennzeichnet, daß ein Datenzwischenspeicher (DZSP) vorgesehen ist, der jeweils ein Datenwort bis zur Einspeicherung in den Datenspeicher (DSP) festhält.

16. Schaltungsanordnung nach Anspruch 14, dadurch gekennzeichnet, daß ein Adressenzwischenspeicher (AZSP) vorgesehen ist, der die zusammen mit mehreren für einen Teilnehmer bestimmten Datenworten angebotene Adresse (ADK) dieses Teilnehmers vorübergehend aufnimmt und mit seinen Ausgängen an die höherwertigen Adressiereingänge des Datenspeichers (DSP) angeschlossen ist.

17. Schaltungsanordnung nach einem der Ansprüche 14 oder 16, dadurch gekennzeichnet, daß ein Wortzähler (WZ) vorgesehen ist, der beim Einspeichern von für einen Teilnehmerapparat bestimmten Anzeigedaten (DAT) in den Datenspeicher (DSP) nach jedem empfangenen Wort einen Schritt weiterzählt und mit seinen Ausgängen während des Einspeichervorganges an die niederwertigen Adressiereingänge des Datenspeichers (DSP) angeschlossen ist.

18. Schaltungsanordnung nach Anspruch 17, dadurch gekennzeichnet, daß der Wortzähler (WZ) über einen zweiten Takteingang verfügt, über den er in schnellerer Folge weitergezählt wird, wenn keine einzuspeichernden Datenworte mehr für einen Teilnehmerapparat angeboten werden, so daß die restlichen Speicherzellen des für den betreffenden Teilnehmer vorgesehen Speicherbreiches im Datenspeicher (DSP) gelöscht, oder mit Nullen beschrieben werden.

19. Schaltungsanordnung nach Anspruch 14, dadurch gekennzeichnet, daß ein Adressenumschalter (AUM) vorgesehen ist, der beim Empfang von Anzeigedaten (DAT) von der zentralen Steuereinrichtung (ZST) die Adressiereingänge des Datenspeichers (DSP) von den Ausgängen eines Ausleseadressenzählers (AAZ) abschaltet und an die Ausgänge des Adressenzwischenspeichers (AZSP) sowie die Ausgänge des Wortzählers (WZ) anschaltet.

20. Schaltungsanordnung nach Anspruch 14, dadurch gekennzeichnet, daß für mehrere Teilnehmerapparate Teilnehmerzwischenspeicher (TZSP) vorgesehen sind, die vorübergehend jeweils ein aus dem Datenspeicher (DSP) ausgelesenes Anzeigedatenwort aufnehmen, das in einem von mehreren nachgeschalteten Parallel-Seriell-Wandlern (PSW) au einem seriellen Impulstelegramm umgeformt und über einen Demultiplexer (DEMUX) über die Anschlußadern (c/d) zum Teilnehmerapparat gesendet wird.

21. Schaltungsanordnung nach Anspruch 20, dadurch gekennzeichnet, daß mehrere serielle Impulstelegramme, die jeweils ein Datenwort für eine Anzeigeeinheit (AE) darstellen, zu verschiedenen Teilnehmern gleichzeitig ausgesendet werden.

**Revendications**

1. Appareil téléphonique avec des dispositifs indicateurs optiques, où sont indiqués, à l'aide d'éléments indicateurs alphnumériques, le numéro d'appel du correspondant et, en plus, des informations concernant le genre de la communication et l'état de la communication, et où l'information à indiquer est transmise par la ligne de branchement, caractérisé en ce qu'est prévue une indication d'état (S) qui, en outre du genre de la communication et de l'état de la communication, indique aussi les classes d'autorisation et des particularités supplémentaires branchées pour être actives, de façon permanente ou passagère, d'un partenaire (A ou B) intervanant dans la communication considérée et en ce que, à l'état de repos de l'appareil téléphonique, elle indique, dans des éléments indicateurs (AE), des particularités associées au branchement propre.

2. Appareil téléphonique suivant la revendication 1, caractérisé en ce que des propriétés particulières (telles que par exemple, position de nuit, position de service, appareillage d'hôtel, position de conférence) qui sont assignées temporairement ou de façon permanente à un branchement, sont indiquées dans des unités indicatrices (AE) séparées.

3. Appareil téléphonique suivant la revendication 1, caractérisé en ce que, pour une autorisation correspondante d'un abonné appelant (A), il est indiqué à celui-ci au moyen de quel numéro de post-sélection ou de quelle touche à actionner une particularité existant chez un abonné appelé (B) peut être passagèrement supprimée ou rendue active pour cette communication.

4. Appareil téléphonique suivant la revendication 1, caractérisé en ce que, pour une autorisation correspondante d'un abonné (A), peut être mise en oeuvre, par le choix d'un chiffre caractéristique ou par l'actionnement d'une touche particulière et par le choix subséquent d'un numéro d'abonné, une indication de l'état d'un autre abonné, sans qu'une communication soit établie avec l'abonné (B) considéré, et en ce que, après cela, par des manipulations de service du premier abonné (A), est possible un changement des particularités existant chez cet abonné dont le numéro d'appel est par ailleurs indiqué.

5. Appareil téléphonique suivant la revendication 1, caractérisé en ce que, pour une autorisation correspondante d'un abonné (A), par le choix de chiffres caractéristiques ou par l'actionnement de touches particulières, une indication de données d'installation peut être mise en activité, et en ce qu'un changement de ces données est possible, par exemple pour mettre en activité ou pour bloquer des particularités à l'intérieur de l'installation centrale (VA).

6. Appareil téléphonique suivant la revendication 1, caractérisé en ce que, dans un branchement d'abonné (B) autorisé en particulier comme poste de service, il est indiqué en outre quand un abonné appelant (A) exprime des souhaits particuliers au moyen d'autres caractéristiques transmises dans le branchement à la suite de l'établissement de la communication.

7. Appareil téléphonique suivant la revendication 1, caractérisé en ce que, dans un branchement d'abonné (A) autorisé en particulier comme poste de conférence, après actionnement d'une touche pour la mise en oeuvre d'une communication de conférence, il est indiqué combien de participants peuvent être amenés à participer à la communication en conférence et combien d'abonnés participent en fait à celle-ci, et en ce que, dans cet appareil d'abonné (A) sont fournis, par l'intermédiaire des unités indicatrices (AE), des renseignements sur les manipulations de service qui doivent être exécutées en particulier.

8. Appareil téléphonique suivant la revendication 1, caractérisé en ce que les données d'un abonné appelant (A) sont indiquées chez un abonné appelé (B) même avant l'établissement d'une liaison de conversation.

9. Appareil téléphonique suivant la revendication 1, caractérisé en ce que, lors d'une communication de conversation existante, il est indiqué chaz l'un des abonnés (A ou B) quand celui-ci est demandé par un troisième abonné (C).

10. Appareil téléphonique suivant la revendication 9, caractérisé en ce que l'indication chez l'un des abonnés. (A ou B) se trouvant en conversation, n'a lieu que lorsqu'un troisième abonné appelant (C) permet la mise en oeuvre des particularités connues "toucher" ou "intervenir".

11. Appareil téléphonique suivant la revendication 1, caractérisé en ce que l'indication chez l'un des abonnés (A ou B) se trouvant en conversation est étendue à des informations supplémentaires lorsque son correspondant (B ou A) provoque le changement d'un état de communication (par exemple répercussion) et que, de ce fait, il se met dans une position d'attente.

12. Appareil téléphonique suivant la revendication 1, caractérisé en ce que les éléments indicateurs (AE) sont utilisés également pour l'indication d'informations relatives à la tarification.

13. Appareil téléphonique suivant la revendication 1, caractérisé en ce que, dans la commande (S) pour les éléments indicateurs (AE), est prévu un point de coupure (SD) pour le branchement d'une imprimante (D) au moyen dde laquelle l'information indiquée peut être imprimée de façon permanente.

14. Agencement de circuits pour tenir prêtes des données pour la commande d'éléments indicateurs se trouvant dans des appareils d'abonnés, suivant les revendications 1 à 13, caractérisé en ce qu'est prévue, un côté du l'installation, pour un groupe d'abonnés, une mémoire des données commune (DSP) qui reçoit des données d'indication (DAT) offertes mot per mot, par abonné et par unité indicatrice (AE), par la commande centrale (ZST) de l'installation centrale (VA); en ce que cette mêmoire de données (DSP) est lue en ordre cylique, où, ensuite, chaque mot de données par abonné est transfromé en parallèle/série et est enoyvé comme télégramme d'impulsions, en passant par les lignes de raccordement (c/d), à l'appareil de l'abonné; et en ce que les éléments indicateurs (AE) et leurs commandes du côté de l'appareil, sont alimentés en courant par ces lignes de raccordement (c/d).

15. Agencement de circuits suivant la revendication 14, caractérisé en ce qu'est prévue une mémoire intermédiaire de données (DZSP) qui maintient chaque fois un mot de données jusqu'à sa mise en mémoire dans la mémoire de données (DSP).

16. Agencement de circuits suivant la revendication 14, caractérisé en ce qu'est prévue une mémoire intermédiaire d'adresses (AZSP) qui reçoit passagèrement, en même temps que plusieurs mots de données associés à un abonné, des addresses offertes (AER) de cet abonné, et qui est raccordée par ses sorties aux entrées d'adresse d'ordre supérieur de la mémoire de données (DSP).

17. Agencement de circuits suivant l'une des revendications 14 ou 16, caractérisé en ce qu'est prévu un compteur de mots (WZ) qui, lors de la mise en mémoire de données indicatrices (DAT) relatives à un appareil d'abonné dans la mémoire des données (DSP), continue à compter un pas après chaque mot reçu, et qui est raccordé par ses sorties, pendant le processus de mise en mémoire, aux entrées d'adresse d'ordre inférieur de la mémoire de données (DSP).

18. Agencement de circuits suivant la revendication 17, caractérisé en ce que le compteur de mots (WZ) dispose d'une deuxième entrée d'horloge par laquelle le compte se poursuit en succession plus rapide lorsque ne sont plus offerts des mots de données à emmagasiner pour un appareil d'abonné, en sorte que les cellules restantes de la mémoire, de la région de la mémoire prévue pour l'abonné considéré, dans la mémoire des données (DSP), sont effectées ou sont occupées par des zéros.

19. Agencement de circuits suivant la revendication 14, caractérisé en ce qu'est prévu un commutateur d'adresse (AUM) qui, lors de la réception de données d'indication (DAT) de la part du dispositif de commande central (ZST), débranche les entrées d'adresse de la mémoire des données (DSP) des sorties d'un compteur d'adresses de lecture (AAZ) et les branche aux sorties de la mémoire intermédiaire d'adresses (AZSP) ainsi qu'aux sorties du compteur de mots (WZ).

20. Agencement de circuits suivant la revendication 14, caractérisé en ce que sont prévues, pour plusieurs appareils d'abonnés, des mémoires intermédiaires d'abonnés (TZSP) qui reçoivent passagèrement chaque fois un mot de données d'indication lu de la mémoire des données (DSP), lequel mot est transformé en télégramme d'impulsions en série par plusieurs convertisseurs parallèle/série (PSW) branchés à la suite, et envoyé, par un démultiplexeur (DEMUX), par l'intermédiaire des lignes de raccordement (c/d), à l'appareil d'abonné.

21. Agencement de circuits suivant la revendication 20, caractérisé en ce que plusieurs télégrammes d'impulsions en série, qui représentent chaque fois un mot de données pour une unité indicatrice (AE), sont envoyés simultanément à différents abonnés.

## Claims

1. Telephone set with optical indicating equipments, wherein the telephone number of the partner in conversation and additional data concerning the kind of connection and the state of the connection are indicated by multi-cypher alphanumeric indicating elements and wherein the information to be indicated is transmitted over the subscriber's line, characterised thereby, that a status indication (S) is provided, which apart from the kind of connection and the state of the connection also indicates authorisation classes, which have been switched to be effective permanently or temporarily, and additional features of a partner (A or B) participating in the connection concerned and that the features associated with the own connection appear in the indicating elements (AE) in the rest state of the telephone set.

2. Telephone set according to claim 1, characterised thereby, that particular properties, for example night station, service station, hotel set, conference station, which have been permanently or temporarily allocated to a connection, are indicated in separate indicating units (AE).

3. Telephone set according to claim 1, characterised thereby, that in the case of appropriate authorisation of a calling subscriber (A), it is indicated in this one by which digit to be further selected or by which key to be actuated, a feature existing at a called subscriber (B) can be cancelled temporarily or be made effective for this one connection.

4. Telephone set according to claim 1, characterised thereby, that in the case of appropriate authorisation of a subscriber (A), an indication of the status of another subscriber can be effected through selection of a digit or actuation of a special key and subsequent selection of a subscriber's number without a connection to the concerned subscriber (B) being established and that an alteration of existing features at this subscriber, whose telephone number is moreover indicated, is thereupon possible through operating procedures of the first subscriber (A).

5. Telephone set according to claim 1, characterised thereby, that in the case of appropriate authorisation of a subscriber (A), an indication of installation data can be effected through selection of digits or actuation of special keys and that an alteration of these data is possible, for example in order to activate or to block features within the exchange (VA).

6. Telephone set according to claim 1, characterised thereby, that in the case a subscriber's connection (B) particularly authorised as service station, it is indicated additionally when a calling subscriber (A) expresses particular wishes by further digits put through following the establishment of the connection.

7. Telephone set according to claim 1, characterised thereby, that in the case a subscriber's connection (A) particularly authorised as conference station, it is indicated after the actuation of a key for the initiation of a conference connection how many subscribers can participate in the conference connection and how many subscribers are actually participating in it and that instructions on which operating procedures are in detail to be performed are given by way of the indicating units (AE) in this subscriber's set (A).

8. Telephone set according to claim 1, characterised thereby, that the data of a calling subscriber (A) are indicated at the called subscriber (B) even before a speech connection comes into being.

9. Telephone set according to claim 1, characterised thereby, that in case of an existing speech connection, it is indicated at one of the subscribers (A or B) when this one is wanted by a third subscriber (C).

10. Telephone set according to claim 9, characterised thereby, that the indication at a subscriber (A or B) in conversation takes place only when a third calling subscriber (C) lets one of the known features "knocking" or "switching-in" become effective.

11. Telephone set according to claim 1, characterised thereby, that the indication at a subscriber (A or B) in conversation is enlarged by additional data when the partner (B or A) in conversion effects the alteration of a state of connection (for example query) and thereby gets into a waiting position.

12. Telephone set according to claim 1, characterised thereby, that the indicating elements (AE) are also used for the indication of fee data.

13. Telephone set according to claim 1, characterised thereby, that an interface (SD) for the connection of a printer (D), by which the indicated information can be printed out permanently, is provided in the control (S) for the indicating elements (AE).

14. Circuit arrangements for the preparation of data for the driving of indicating elements disposed in subscribers' sets according to the claims 1 to 13, characterised thereby, that a common data store (DSP) is provided for a group of subscribers on the system side and receives indication data (DAT) offered word by word for each subscriber and each indicating unit (AE) from the central control (ZST) of the exchange (VA), that this data store (DSP) is read out cyclically, wherein each data word for each subscriber is subsequently converted from parallel to serial and sent as pulse telegram by way of connecting lines (c/d) to the subscriber set and that the indicating elements (AE) and their control at the set end are supplied with current over these connecting lines (c/d).

15. Circuit arrangement according to claim 14, characterised thereby, that an intermediate data store (DZSP) is provided, which retains a data word each time until entry into the data store (DSP).

16. Circuit arrangement according to claim 14, characterised thereby, that an intermediate address store (AZSP) is provided, which temporarily receives the address (ADR) of a subscriber offered together with several data words intended for this subscriber and is connected by its outputs to the higher valency address inputs of the data store (DSP).

17. Circuit arrangement according to one of the claims 14 or 16, characterised thereby, that a word counter (WZ) is provided, which on the entry of indication data (DAT) intended for a subscriber's set into the data store (DSP) counts one step further after each received word and during the entry operation is connected by its outputs to the lower valency address inputs of the data store (DSP).

18. Circuit arrangement according to claim 17, characterised thereby, that the word counter (WZ) disposes of a second pulse input, by way of which it is made to count in more rapid sequence when no data words to be entered are any longer offered for a subscriber's set so that the remaining storage cells of the storage region provided for the subscriber concerned in the data store (DSP) can be erased or be inscribed with zeros.

19. Circuit arrangement according to claim 14, characterised thereby that an address change-over switch (AUM) is provided, which on the reception of indication data (DAT) from the central control equipment (ZST) switches the address inputs of the data store (DSP) off from the outputs of a read-out address counter (AAZ) and onto the outputs of the intermediate address store (AZSP) as well as onto the outputs of the word counter (WZ).

20. Circuit arrangement according to claim 14, characterised thereby, that for several subscriber's sets, intermediate subscriber stores (TZSP) are provided, which temporarily receive an indication data word which has been read out each time from the data store and is converted into a serial pulse telegram in one of several parallel-to-serial converters (PSW) connected therebehind and sent by way of a demultiplexer (DEMUX) over the connecting lines (c/d) to the subscriber's set.

21. Circuit arrangement according to claim 20, characterised thereby, that several serial pulse telegrams, which each represent a respective data word for an indicating unit (AE), are sent out at the same time to different subscribers.

Fig.1

Fig.2

Fig.3